**Europäisches Patentamt**

**European Patent Office**

**Office européen des brevets**

(19)

(11) Veröffentlichungsnummer: **0 157 168**
A2

(12) ## EUROPÄISCHE PATENTANMELDUNG

(21) Anmeldenummer: **85102120.4**

(22) Anmeldetag: **27.02.85**

(51) Int. Cl.⁴: **F 16 L 59/16,** B 29 C 65/20

(30) Priorität: **06.04.84 DE 3413780**

(43) Veröffentlichungstag der Anmeldung: **09.10.85**
**Patentblatt 85/41**

(84) Benannte Vertragsstaaten: **AT BE CH DE FR GB IT LI LU NL SE**

(71) Anmelder: **Armbruster, Hans, Dipl.-Ing., Essener Strasse 51 a, D-4030 Ratingen 5 (DE)**

(72) Erfinder: **Armbruster, Hans, Dipl.-Ing., Essener Strasse 51 a, D-4030 Ratingen 5 (DE)**

(54) **Verfahren zur Herstellung einer Muffenverbindung einer verlegten Kunststoffmantelrohrleitung für Fernwärme durch Heizelement-Stumpfschweissen.**

(57) Die Erfindung betrifft ein Verfahren zur Herstellung einer Muffenverbindung von Kunststoffmantelrohrleitungen, insbesondere für Fernwärme, wobei zwei PE-Halbrohrschalen gleichen Durchmessers und Wandstärke + Toleranz mit dem PE-Mantelrohr durch das Heizelement-Stumpfschweißen miteinander und mit den Mantelrohren verschweißt werden. Dieses ist dadurch möglich, weil die Maßhaltigkeit durch die Halbschalen der Schweißmaschine gewährleistet wird und die gleichlaufende Anschrägung unter einem Winkel von 60° den zum Verschweißen nötigen Fügedruck ermöglicht. Der Fügedruck ist einer der Schweißparameter, der bei dem Heizelement-Stumpfschweißen festgelegt und auf die beiden Werkstücke aufgebracht wird.

Schweißmuffe Typ A1

EP 0 157 168 A2

Verfahren zur Herstellung einer Muffenverbindung
einer verlegten Kunststoffmantelrohrleitung für
Fernwärme durch Heizelement-Stumpfverschweißen

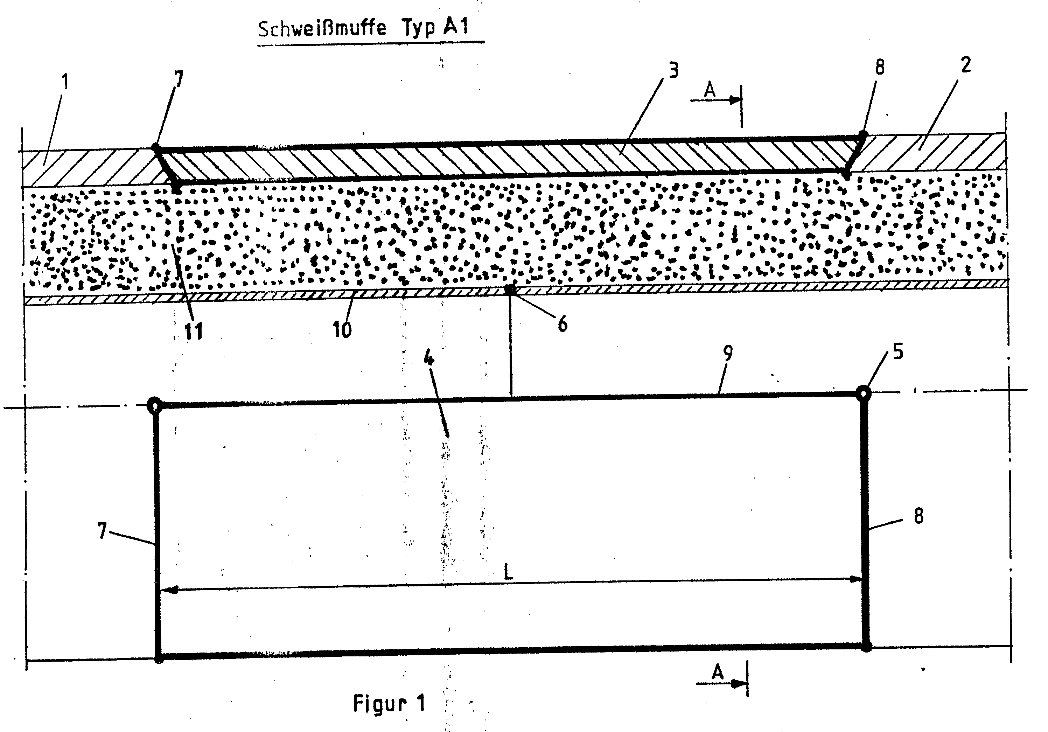

Die Erfindung betrifft die Muffenverbindung einer
Leitungsverbindung im Kunststoffmantelrohrsystem.
Als Muffe wird der Teil einer kanalfrei verlegten Fernwärmeleitung bezeichnet, der zwei Mantelrohrenden
miteinander verbindet, Fig. 1
An diese Verbindung werden folgende Forderungen
gestellt:

1. Dauerhafte wasserdichte Verbindung der Mantelrohre,
   deren Dichtungseigenschaft unabhängig von der
   Dimension der Rohre ist.
2. Eine Verschiebung der Muffe und deren Abdichtung
   gegenüber dem Mantelrohr muß bei allen Betriebszuständen der Leitung ausgeschlossen sein.
3. Ableitung der auf die Muffe wirkenden Kräfte in
   das Mantelrohr.

Der heutige Stand der Technik der Muffenausführung ist
in Anlage 1 beschrieben. Siehe hierzu AGFW-Mitgliederinformation (93-104) Wirsbo und Kabelmetal "Kunststoffverbundmantelrohre für Fernwärmeleitungen" 1983 Seite
89 bis 104 der Arbeitsgemeinschaft Fernwärme e.V.
bei der VDEW Stresemannallee 23 6000 Frankfurt/M 70,
sowie die Zeitschrift Fernwärme International Heft 1/
1984, Herausgeber Arbeitsgemeinschaft Fernwärme e.V.,
Adresse wie oben angegeben, Seite 2 - 4.
Es gibt zur Zeit zwei grundverschiedene Systeme der
Muffenverbindungen

1. die Schrumpfverbindung, die keine kraftschlüssige
   Verbindung bewirkt, wie in Anlage 1 beschrieben
2. die Schweißmuffe, die eine kraftschlüssige Verbindung durch Verschweißen des PE-Rohres ist. Der
   heutige Stand der Technik ist in Anlage 2 beschrieben.

Für die drei Schweißmuffen der Firmen Swedish Joint, Kabelmetal und I.C.Moller ist Patent angemeldet worden. Aufgabe der Erfindung ist es

a) die Schweißmuffenverbindung zu verbessern

b) die Überprüfbarkeit der Verschweißung zu gewährleisten

c) die gleiche Qualität der Muffenverbindung bei einer Reparatur einer Muffenverbindung zu gewährleisten

d) die gleiche Qualität der Muffenverbindung bei nachträglichem Einbau von Abgängen von vorhandenen Leitungen zu ermöglichen.

Bei der zur Zeit bekannten Muffentechnik ist im Falle einer Undichtheit eine Reparatur durch dieselbe Art der Muffenverbindung nicht möglich (ausgenommen die Bandmuffe). Eine Prüfung der Qualität der Schweißnaht durch Röntgen oder Ultraschall ergibt unbrauchbare Ergebnisse. Bei nachträglichem Einbau von Abgängen kann keine einzige der Muffenverbindungen, ob Schrumpfmuffe oder die bekannten Schweißmuffen, angewandt werden. Bei den geschweißten Muffenverbindungen wird bei Abgängen das Extrusionsschweißen angewandt, was auf der Baustelle sehr probelematisch ist und die gewünschte Qualität nicht gewährleistet.

Aufgabe der Erfindung ist es, alle diese Mängel zu beseitigen. Diese Aufgabe wird erfindungsgemäß dadurch gelöst, daß zwei PE-Rohrhalbschalen ($R\pi$ + 2 cm) wie in den Ansprüchen 1 - 7 beschrieben, miteinander durch das Heizelement-Stumpfschweißen verschweißt werden. Es ist bekannt, daß dieses Schweißverfahren das bewährteste Kunststoffschweißverfahren ist und die höchsten Festigkeitswerte liefert.

Nach Festlegung der Schweißparameter und deren Einhaltung ist die gute Schweißnahtqualität gesichert.

Der Vorteil der schweißtechnischen Gestaltung liegt darin, daß die Qualität jeder Naht durch Röntgen und Ultraschall überprüft werden kann.

Die Schweißmuffe "A 1" kann nachträglich an jedem Punkt der Leitung in jeder gewünschten Lage hergestellt werden. Dieses bietet den großen Vorteil, daß nachträgliche Abgänge als Stuten eingeschweißt werden können und eine Halbschale mit einem Abgang mit einer anderen Halbschale verschweißt wird. Der Vorteil liegt darin, daß die Fernwärmeleitung nicht entleert werden muß. Es erfolgt keine Trennung der Leitung mit der Gefahr eines Rücksprunges der Leitung durch Abkühlung (eventuell neues Vorspannen) wie bei vorgefertigten Abgängen.

Die Abmessungen des Kopfloches für die Tiefbauarbeiten sind wesentlich geringer. Alle Vorteile der Schweißmuffe A 1 ergeben eine wirtschaftlichere Anwendung dieser Muffenverbindung, als die zur Zeit bekannten Schweiß- und Schrumpfmuffen.

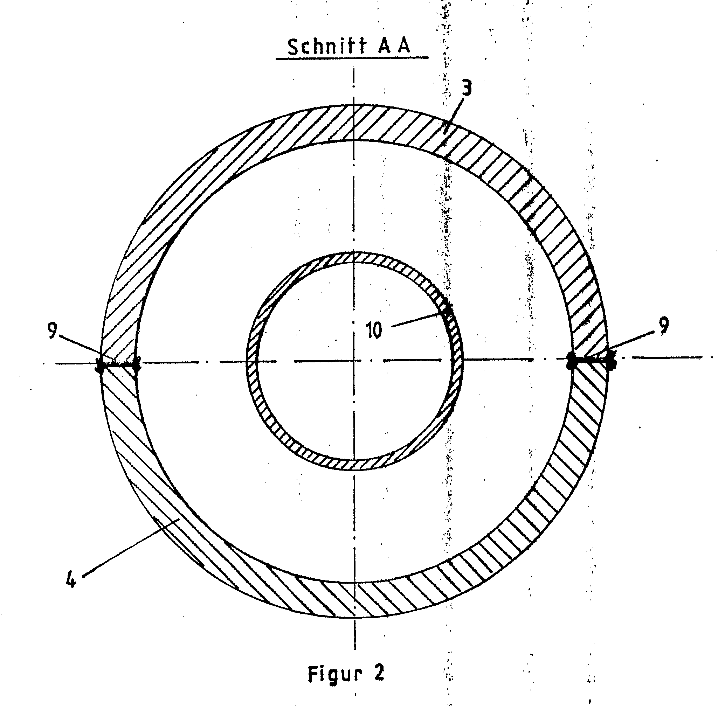

Erläuterungen zu den Zeichnungen Fig. 1 und Fig. 2:

Fig. 1 Längsschnitt

Fig. 2 Querschnitt

Es bedeuten:

1 PE-Rohr
2 PE-Rohr
3 PE-Halbschale
4 PE-Halbschale
5 Bohrung
6 Schweißnaht
7 PE-Rundschweißnaht
8 PE-Rundschweißnaht
9 PE-Längsnaht
10 Stahlrohr
11 PUR-Schaum

Ansprüche

1. **Verfahren zur Herstellung einer Muffenverbindung eiher verlegten Kunststoffmantelrohrleitung für Fernwärme durch Heizelement-Stumpfverschweißen** zweier PE-Rohrhalbschalen gleichen Durchmessers und Wandstärke / Toleranz für Wanddicke, wie das PE-Mantelrohr und der Länge "1", die dem Abstand der beiden anliegenden Mantelrohre entspricht "Schweißmuffe A 1".

2. Verfahren nach Anspruch 1, gekennzeichnet dadurch, daß die Maßhaltigkeit der PE-Rohrhalbschalen durch die Maßhaltigkeit der Halbschalen der Schweißmaschine garantiert wird.

3. Verfahren nach Anspruch 1 bis 2 gekennzeichnet dadurch, daß die beiden Enden des PE-Mantelrohres unter einem Winkel von 60° schräg angefaßt werden.

4. Verfahren nach Anspruch 1 bis 3, gekennzeichnet dadurch, daß die beiden Enden der Rohrhalbschalen in gleicher Richtung mit dem PE-Mantelrohr unter einem Winkel von 60° schräg angefaßt werden.

5. Verfahren nach Anspruch 1 bis 4, gekennzeichnet dadurch, daß die 1-te Halbschale durch das PE-Heizelement-Stumpfschweißverfahren an den beiden PE-Mantelrohrenden zur gleichen Zeit verschweißt wird.

6. Verfahren nach Anspruch 1-5, gekennzeichnet dadurch, daß die zweite PE-Halbschale gleichzeitig an den beiden PE-Mantelrohrenden und an den zwei Längsseiten der ersten Halbschale durch das PE-Heizelementschweißverfahren verschweißt wird und gleichzeitig mit der 1-ten Halbschale.

7. Verfahren nach Anspruch 1-6, gekennzeichnet dadurch, daß im Schnittpunkt zweier Schweißnähte (4 Stück) runde Löcher gebohrt werden, die durch Heizelementschweißung mit einem runden Stopfen geschlossen werden. Zwei Stück werden vor und zwei Stück nach dem Ausschäumen mit PUR-Schaum geschlossen.

8. Verfahren gekennzeichnet dadurch, daß nach Fertigstellung der Muffenverbindung eine Luftdruckprobe und im Anschluß das Ausschäumen mit PUR-Schaum, sowie das Verschließen der Einfüll- und Entlüftungsöffnung erfolgt.

Schweißmuffe Typ A1

Figur 1

Schnitt A A

Figur 2